# EUROPÄISCHE PATENTSCHRIFT

(11) **EP 0 770 473 B1**
(45) Veröffentlichungstag und Bekanntmachung des Hinweises auf die Patenterteilung: **11.04.2001**
(21) Anmeldenummer: 96116993.5
(22) Anmeldetag: 23.10.1996
(51) Int. Cl.: B29D 7/00, B29C 55/00, H01G 4/18

(54) **Polyesterfolie**
Polyester film
Film de polyester

(30) Priorität: 25.10.1995 DE 19539651; 12.02.1996 DE 19604828
(43) Veröffentlichungstag der Anmeldung: 02.05.1997
(73) Patentinhaber: Mitsubishi Polyester Film GmbH, 65023 Wiesbaden (DE)
(72) Erfinder: Kurz, Rainer, 65232 Taunusstein (DE); Hora, Franz, 65830 Kriftel (DE)
(74) Vertreter: Zounek, Nikolai, Dipl.-Ing.

(56) Entgegenhaltungen:
- EP-A- 0 378 154
- EP-A- 0 423 402
- EP-A- 0 622 173
- WO-A-88/07928
- WO-A-94/13464
- WO-A-94/13482
- GB-A- 1 068 713
- GB-A- 2 143 772
- US-A- 3 884 870
- US-A- 3 980 611
- US-A- 4 138 386

## Beschreibung

Die vorliegende Erfindung betrifft einen Polyesterrohstoff, insbesondere einen Polyethylenterephthalatrohstoff (PET-Rohstoff), der feinteilige, verteilte, anorganische und/oder organische Partikel enthält sowie daraus hergestellte Folien, die verbesserte Wickeleigenschaften aufweisen und sich deshalb besser als Kondensatorfolien eignen als herkömmliche Folien.

Insbesondere für die Anwendung in Kondensatoren werden immer dünnere und glattere Folien als Dielektrika gefordert, um die Baugröße der Kondensatoren zu reduzieren beziehungsweise die Kapazitätsausbeute zu erhöhen. Neben der Reduzierung der Baugröße, die zum Beispiel durch die Reduzierung der Foliendicke erreicht werden kann, besteht ein Interesse die Kapazitätsausbeute weiter zu erhöhen. Dies ist prinzipiell durch glattere Folien möglich. Allerdings führt die Verarbeitung von immer dünneren, konventionell gestreckten Folien zunehmend dazu, daß irreversible Foliendefekte, wie das Entstehen von Falten und Verdehnungen, bei den verschiedenen Verarbeitungsschritten, wie Wickeln, Metallisieren, Schneiden und Kondensatorwickeln, auftreten. Damit eine Folie ohne Falten und Verdehnungen verarbeitet werden kann, benötigt sie zum einen einen ausreichenden Schlupf, der ein Verblocken der Folie bei den einzelnen Verarbeitungsschritten verhindert. Zum anderen sollte die Folie neben einem guten Schlupf eine Oberflächentopographie aufzeigen, die es ermöglicht, daß die Luft zwischen den einzelnen Folienlagen des Wickels hinreichend schnell entweichen kann. Technische Lösungsansätze, wie zunehmende Wickelspannungen, sind bei Ultradünnstfolien nur begrenzt anwendbar, da eine Zunahme der Wickelspannung zu irreversiblen Foliendefekten, wie Verdehnungen, führen kann. Neben einem guten Folienhandling stellen die elektrischen Eigenschaften insbesondere die Durchschlagfestigkeit beziehungsweise das Fehlstellenverhalten ein weiteres Kriterium für Kondensatorfolien dar. Es ist bekannt, daß bei Einsatz hoher Partikelkonzentrationen beziehungsweise großer mittlerer Partikeldurchmesser die Zahl der Voids zunimmt, bedingt durch die schlechte Affinität der anorganischen Partikel zu thermoplastischen Polymeren im geschmolzenen Zustand sowie beim Verstrecken mit den üblichen Streckverhältnissen. Das Vorhandensein derartiger Voids beeinflußt extrem die mechanischen Eigenschaften wie Reißfestigkeit und Reißdehnung und die elektrische Durchschlagfestigkeit der Folie. Darüber hinaus treten vermehrt Abrisse während der Folienproduktion auf, welche sich nachteilig auf Produktivität und Stabilität des Folienherstellprozesses auswirken. Unter diesen Aspekten stellt der Trübungswert für Folien bei vergleichbaren Oberflächenrauheiten ein weiteres Kriterium dar. Die Trübung der Folien wird zum einen durch die Oberflächentrübung, bedingt durch die Oberflächenrauheit, und die Volumentrübung, im wesentlichen bedingt durch (a) die Anzahl der Partikel, (b) die Größe der Partikel und (c) die Größe der um die Partikel vorhandenen Voids, verursacht. Dementsprechend sind bei vergleichbaren Oberflächenrauheiten Folien mit geringeren Trübungen von Vorteil.

Es ist bekannt (US-A-3,980,611 Du Pont), daß durch Kombination von kleinen, mittleren und großen Partikeln in Abhängigkeit von der Foliendicke das Folienhandling verbessert werden kann. In der US-A-3,980,611 wird dies durch eine Kombination von großen (2,5-10,0 µm) mit mittleren (1,0-2,5 µm) und kleinen (<1,0 µm) Partikeln bewirkt, wobei bestimmte Relationen von Foliendicke zu Partikelkonzentration erfüllt sein müssen. Nachteilig an diesen ultradünnen Folien ist die relativ große Rauhigkeit beziehungsweise die hohen Oberflächenerhebungen, die durch die mittleren und großen Partikel verursacht werden, die eine geringere Kapazitätsausbeute pro Volumen im Kondensator zur Folge haben.

Es ist weiterhin bekannt (EP-A-0 423 402 Teijin), daß Folien im Dickenbereich zwischen 0,1 und 4 µm durch den Zusatz von inerten, sekundär agglomerierten, anorganischen Partikeln mit einem Teilchendurchmesser von 0,05 bis 5 µm und einem primären, sphärischen Partikel mit einem Teilchendurchmesser von 0,05 bis 4 µm hergestellt werden können.

Die EP-A-0 622 173 beschreibt, daß das Folienhandling einer orientierten, ein- oder mehrschichtigen Folie mit einer Gesamtstärke von ≤ 4 µm und einer Rauhigkeit von < 30 nm dadurch gewährleistet werden kann, daß der Oberflächengas-strömungswiderstand auf mindestens einer Folienoberfläche t ≤ a • d^{b} [sec] (mit a=0-10.000 [sec/µm], b= -3 bis 0 und d=Gesamtfoliendicke ≤ 4 µm) beträgt. Dies kann gemäß EP-A-0 622 173 durch die Kombination eines sphärischen Partikels I mit einem zweiten Partikel II, das einen mittleren Teilchendurchmesser von 0,05-2,5 µm aufweist, wobei der mittlere Teilchendurchmesser der Partikel II größer ist als der der Partikel I, erreicht werden. Aufgabe der vorliegenden Erfindung war es nun, die Wickelstabilität beim Wickeln der metallisierten Schmalschnitte solcher ultradünnen Polyesterfolien zu verbessern. (ultradünne Folien, ≤ 4µm).

Die ultradünnen Folien sollen einen ausreichenden Schlupf aufweisen (gutes Folienhandling) sowie Folienrauhigkeiten Rₐ<30 n m, Oberflächengasströmumgswiderstände t < 2900 sec und Trübungswerte < 4,0 %. Darüber hinaus sollen die Folien eine verbesserte Wickelstabilität beim Wickeln der metallisierten Schmalschnitte zu Schichtkondensatoren aufweisen. Die Wickelstabilität ist die Anzahl der gewickelten Windungen auf einen Kern mit einem Außendurchmesser zwischen 40 und 80 cm. Diese Windungszahl bzw. die Anzahl der gewickelten Lagen soll für eine 2 µm dicke, 4,5 mm breite Folie, die mit einem Wickelzug von < 10 N/mm² gewickelt wurde, > 8000 sein.

Diese Aufgabe wird gelöst durch eine ultradünne Folien mit einer Dicke von ≤ 4 µm, hergestellt aus einem Polyesterrohstoff, der eine Kombination von Partikeln I und II enthält, wobei die Partikel I einen mittleren Partikeldurchmesser von < 0,5 µm und die Partikel II einen mittleren Teilchendurchmesser von 3,0 bis 4,0 µm aufweisen. Derartige Folien können ohne die angeführten Probleme des Folienhandlings hergestellt werden. Darüber hinaus weisen diese Folien exzellente Wickelstabilitäten auf.

Die Erfindung betrifft dementsprechend eine orientierte ein- oder mehrschichtige Folie aus Polyester mit einer Gesamtdicke von ≤ 4 µm und einer Rauhigkeit auf mindestens einer ihrer Oberflächen von Rₐ < 30 nm, bevorzugt 29 nm, und einer Oberflächengasströmungszeit auf mindestens einer Folienoberfläche von t < 2.900 sec, bevorzugt < 2.500 sec, insbesondere < 2.300, wobei die Folie zur Verbesserung der Wickelstabilität deren metallisierter Schmalschnitte zu einer Windungszahl von ≥ 8.000 Partikel I, bevorgzut >8.200, insbesondere > 8.300, mit einem mittleren Teilchendurchmesser von 3,0 bis 4,0 µm enthält, wobei die Partikel I und II in der Folie in einer Menge von 0,005 bis 5 Gew.-%, bezogen auf das Gesamtgewicht der Folie, enthalten sind.

Die erfindungsgemäßen ultradünnen Folien mit Rauhigkeiten Rₐ unter 30 nm und einem Oberflächengasströmungswiderstand t < 2.900 sec und einer Wickelstabilität von mindestens 8.000, die sich ohne Falten und Verdehnungen verarbeiten lassen, können hergestellt werden aus dem obigen Folienrohstoff, der neben dem Polyester im wesentlichen anorganische und/oder organische Partikel I mit einem mittleren Teilchendurchmesser < 0,5 µm und anorganische und/oder organische Partikel II mit einem mittleren Teilchendurchmesser von 3,0 bis 4,0 µm enthält. Überraschend hat sich herausgestellt, daß die erfindungsgemäßen Folien eine Trübung von ≤ 4,0%, bevorzugt < 3,9%, insbesondere ≤ 3,8% aufweisen.

Die organischen beziehungsweise anorganischen Partikel I können sowohl sphärisch als auch nicht sphärisch sein und besitzen einen mittleren Teilchendurchmesser von < 0,5 µm, bevorzugt 0,01 bis 0,4 µm, insbesondere 0,3 bis 0,4 µm. Das Ausmaß der Korngrößenverteilung der Partikel II ist nicht kritisch; so können sowohl monodisperse als auch Partikel mit Verteilung eingesetzt werden. Die Partikel I können Primärpartikel, das heißt einzelne, nicht agglomerierte Partikel sein, aber auch sekundär agglomerierte Partikel, das heißt zu größeren Einheiten zusammengelagerte Teilchen sein. Bevorzugt werden sekundär agglomerierte Partikel I eingesetzt. Im Fall der agglomerierten Partikel bezieht sich der mittlere Teilchendurchmesser auf den mittleren Durchmesser der Agglomerate.

Die organischen beziehungsweise anorganischen Partikel II können sowohl sphärisch als auch nicht sphärisch sein und besitzen einen mittleren Teilchendurchmesser von 3,0 bis 4,0 µm, bevorzugt 3,3 bis 3,7 µm, insbesondere um 3,5 µm. Das Ausmaß der Korngrößenverteilung der Partikel II ist nicht kritisch; so können sowohl monodisperse als auch Partikel mit Verteilung eingesetzt werden.

Die Partikel I und II können sowohl anorganische Partikel - beispielsweise aus Kaolin, Aluminiumoxid, Siliciumdioxid, amorpher Kieselsäure, pyrogener Kieselsäure, natürlichem und gefälltem Kalziumcarbonat - als auch organische Partikel - beispielsweise aus Silikonen, Acrylaten oder Epoxidharzverbindungen - sein. Solche Partikel sind käuflich erhältlich.

"Sphärisch" bedeutet, daß die Partikel ein Aspect Ratio von 1 bis 1,2 besitzen. "Aspect Ratio" ist der Quotient aus dem größten und dem kleinsten Partikeldurchmesser. Dieses ist im Idealfall gleich 1. Die Aspect-Ratio-Werte werden an Teilchen in einer fertigen Folie gemessen und beziehen sich dementsprechend nicht auf die Aspect-Ratio-Werte der freien Partikel. "Monodispers" bedeutet, daß die Partikel eine sehr enge Korngrößenverteilung aufweisen; im Idealfall gar keine Verteilung aufweisen. In diesem Fall existiert keine mittlere Korngröße mehr, da quasi alle Teilchen den gleichen Durchmesser aufweisen. Der Teilchendurchmesser der Partikel und/oder Agglomerate wie auch das Aspect Ratio und die Monodispersität können durch Ausmessen von elektronenmikroskopischen Aufnahmen bei einer Auflösung von 3000 bis 10000 bestimmt werden.

Die Folie enthält erfindungsgemäß 0,005 bis 5,0 Gew.-% Teilchen der Sorte I und II (diese Angabe entspricht der Summe der Teilchen I und II und bezieht sich auf das kumulative Gewicht von Polymer und Teilchen). Bevorzugt werden 0,4 bis 1,0 Gew.-% der Partikel I und 0,04 bis 0,1 Gew.-% der Partikel II eingesetzt.

Unter Polyester werden insbesondere Polyesterrohstoffe verstanden, die zum überwiegenden Teil, d.h. zu mindestens 80 Gew.-%, bevorzugt mindestens 90 Gew.-%, aus einem Polymer, ausgewählt aus der Gruppe Polyethylenterephthalat (PET), Polyethylennaphthalat (PEN), Poly-1,4-dicyclohexandimethylenterephthalat (PCT), Polyethylennaphthalatbibenzoat (PENBB) und Blends dieser Polymere bestehen. Bevorzugt sind Polyesterrohstoffe , die vorzugsweise im wesentlichen aus Ethylenterephthalateinheiten und/oder vorzugsweise bis zu 30 Mol-% aus Comonomereinheiten aufgebaut sind, wobei eine Variation in der Glykol- und/oder der Säurekomponente der Comonomereinheiten möglich ist. Die Herstellung der Polyester kann sowohl nach dem Umesterungsverfahren mit den üblichen Katalysatoren, wie z.B. Zn-,. Ca-, Li- und Mn-Salzen, oder nach dem Direktveresterungsverfahren erfolgen.

Die erfindungsgemäße Folie wird aus einer Mischung eines Polyesters mit den bevorzugt sekundär agglomerierten Partikeln I und den Partikeln II hergestellt.

Der Polyesterrohstoff kann durch Zugabe der Partikel vor Beginn der Umesterung oder auch nach Beendigung der Umesterung hergestellt werden. Bevorzugt ist die Zugabe der Partikel in Form einer glykolischen Suspension vor Beendigung der Umesterung. Alternativ können die Partikel auch nach der Rohstoffherstellung durch Blenden, Compoundieren etc. eingearbeitet werden.

Die Polyesterfolien können nach bekannten Verfahren, die nicht näher beschrieben werden müssen, aus oben beschriebenen Rohstoffen oder in Kombination obiger Rohstoffe mit anderen Rohstoffen oder üblichen Additiven in üblichen Mengen von 0,1 bis maximal 10 Gew.-% sowohl als Monofolien als auch als mehrschichtige, gegebenenfalls coextrudierte Folien mit gleichen oder unterschiedlich ausgebildeten Oberflächen hergestellt werden, wobei eine Oberfläche beispielsweise gefüllt beziehungsweise pigmentiert ist und die andere Oberfläche kein Füllstoff beziehungsweise Pigment enthält.

Insbesondere bei einem mehrstufigen Streckprozeß mit hohen Verstreckgraden in einer bevorzugten oder in beiden Flächenrichtungen der Folie, z.B. bei der Herstellung von Folien mit sehr hohen mechanischen Eigenschaften, kommen die Vorzüge der erfindungsgemäß eingebauten Partikel besonders zum Tragen. Hierbei sind auch Streckprozesse mit der Folge längs-quer-längs, simultan (längs-quer) und eine Mehrfachstreckung in einer oder beiden Richtungen möglich.

In den folgenden Beispielen wurden die Partikel I und II nach Beendigung der Umesterung zugegeben und anschließend die Polykondensation nach der für PET üblichen Weise durchgeführt, so daß das Polymer einen SV-Wert von 810 aufweist. Zur Charakterisierung der erhaltenen Folien dienten die folgenden Meßmethoden:

### Oberflächengasströmungszeit

Das Prinzip des Meßverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand wirkt.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit [sec], die die Luft benötigt um in dem Rezipienten einen Druckanstieg von 56 mbar zu bewirken.

| Meßbedingungen: | |
|---|---|
| Meßfläche: | 45,1 [cm²] |
| Anpreßgewicht | 1276 [g] |
| Lufttemperatur | 23 [°C] |
| Luftfeuchte | 50 [%] rel.Feuchte |
| Luftdruck | 1 [bar] |
| Gassammelvolumen | 1,2 [cm³] |
| Druckintervall | 56 [mbar] |

### Rauhigkeitsmessung

Die Bestimmung der Rauhigkeitskenngrößen erfolgt an einem Perthometer® S8P der Fa. Feinprüf Perthen GmbH. Hierbei wird die Folienprobe auf eine Glasplatte aufgebracht und mit einem mechanischen Taster RFHTB 50 eine vorgegebene Strecke abgefahren.

| | |
|---|---|
| Durchmesser der Tasterspitze | 5 [µm] |
| Taststreckenlänge | 1,75 [mm] |
| Grenzwellenlänge (cut-off) | 0,25 [mm] |
| Meßbereich | 12,5 [µm] |
| Tastschritt | 50 |

Rauhigkeitskenngrößen:
Ra Arithmetischer Mittenrauhwert (DIN 4768)
Rz gemittelte Rauhtiefe (DIN 4768/1)
Rt Rauhtiefe (DIN 4762 - 1960)

### Trübungsmessung

Die Prüfung dient zur Bestimmung der Trübung und Transparenz von Kunsstoff-Folien, bei denen die optische Klarheit bzw. Trübung für den Gebrauchswert wesentlich ist. Die Messung erfolgt an dem Hazegard® Hazemeter XL-211 der Fa. BYK Gardner nach ASTM D 1003-61

### Bestimmung der mittleren Partikeldurchmesser

Der mittlere Partikeldurchmesser an Fein- wie auch an Grobpigment wird mit Hilfe eines Korngrößenanalysators Horiba® LA500 der Fa. Horiba bestimmt. Die Bestimmung der mittleren Korngrößen auch als d50-Wert bezeichnet erfolgt an glykolischen Suspensionen der zu untersuchenden Partikel. Der d50-Wert ist der Wert bei dem 50 Gew.% der Teilchen größer sind als der angegebene Wert in µm.

### Folienhandling

Das Folienhandlung wird beurteilt anhand des Auftretens von Falten beim Aufrollen bzw. Schneiden einer biaxial orientierten Folie.
- - =: Faltenbildung
- + =: keine Faltenbildung

### Beispiel A (Vergleichsbeispiel)

Es wurden 4000 ppm eines kleinen, sekundär agglomerierten SiO₂ Partikels (Hersteller: Degussa, Hanau) mit einem mittleren Teilchendurchmesser von 0,3 bis 0,4 µm und 3000 ppm eines mittleren Partikels (CaCO₃) (Hersteller: Omya, Köln) mit einem mittleren Teilchendurchmesser von 1,1 µm in Polyethylenterephthalat (PET) eingearbeitet.

### Beispiel B (Vergleichsbeispiel, entspricht EP-A 0622 173)

Es wurden 3000 ppm eines kleinen, sphärischen, monodispersen SiO₂ Partikels (Hersteller: Merck, Darmstadt) mit einem Teilchendurchmesser von 0,4 µm und 3000 ppm eines mittleren Partikels (CaCO₃) mit einem mittleren Teilchendurchmesser von 0,99 µm in PET eingearbeitet.

### Beispiel C (Vergleichsbeispiel)

Es wurden 5000 ppm eines kleinen, sekundär agglomerierten SiO₂-Partikels mit einem mittleren Teilchendurchmesser von 0,3 bis 0,4 µm und 1000 ppm eines SiO₂-Partikels mit einem mittleren Teilchendurchmesser von 2,5 µm in PET eingearbeitet.

### Beispiel D

Es wurden 5500 ppm eines kleinen, sekundär agglomerierten SiO₂-Partikels mit einem mittleren Teilchendurchmesser von 0,3 bis 0,4 µm und 480 ppm eines großen Partikels (SiO₂) mit einem mittleren Teilchendurchmesser von 3,5 µm in PET eingearbeitet.

Die erhaltenen PET-Chips wurden bei 160 °C auf eine Restfeuchte von 50 ppm getrocknet und bei 280 bis 310 °C extrudiert. Das geschmolzene Polymer wurde aus einer Düse (Düsenspalt 1 mm) über eine Abzugswalze abgezogen. Der nicht verstreckte Film wurde um den Faktor 3,8 in Maschinenrichtung bei 85 bis 135 °C gestreckt. In einem Rahmen erfolgte bei 85 bis 145 °C eine Querstreckung um einen Faktor 3,6 bis 4,5. Anschließend wurde die Folie bei 180 bis 230 °C in einem weiteren Rahmen fixiert.

Die Eigenschaften derart hergestellter Folien sind in den folgenden Tabellen 1 und 2 dargestellt.

**Tabelle 1**

| **Folientyp** | **Rauhigkeit R**_{**a**}**[nm]** | **Foliendicke [µm]** | **Oberflächengasströmungszeit [sec]** | **Trübung [%]** | **Folienhandling** |
|---|---|---|---|---|---|
| Beispiel A | 26 ± 2 | 2 | 1200 ± 200 | 3,9 ± 0,5 | - |
| Beispiel B | 28 ± 5 | 2 | 716 ± 150 | 4,7 ± 0,5 | + |
| Beispiel C | 36 ± 8 | 2 | 1250 ± 100 | 4,5 ± 0,5 | + |
| Beispiel D | 28 ± 6 | 2 | 2200 ± 300 | 3,7 ± 0,5 | + |

**Tabelle 2**

| **Folientyp** | **Foliendicke [µm]** | **Oberflächengasströmungszeit [sec]** | **Rauhigkeit R**_{**a**}**[nm]** | **Wickelstabilität** |
|---|---|---|---|---|
| Beispiel C | 2 | 1250 ± 100 | 36 ± 8 | 7878 |
| Beispiel D | 2 | 2200 ± 300 | 28 ± 6 | 8454 |

Die Folie gemäß Beispiel D zeigt deutlich niedrigere Trübungswerte als die Folien aus den Vergleichsbeispielen. Da die Oberflächenrauheiten (Rₐ-Werte) der erfindungsgemäßen Folie aus Beispiel D mit denen der Folie aus Vergleichsbeispiel B vergleichbar sind, deutet dies bei Beispiel D auf einen geringeren Anteil an Voids und dementsprechend auf verbesserte elektrische Folieneigenschaften sowie auf Vorteile bei der Folienherstellung (weniger Abrisse).

Neben den Vorteilen bezüglich der Oberflächenrauheit, der Wickelbarkeit und niedrigen Trübungen zeigen die erfindungsgemäßen Folien (Beispiel D) im Vergleich zu handelsüblichen Folientypen (Beispiel C = Hostaphan^{®} RE, Hoechst Diafoil) weitere Vorteile bezüglich der Wickelstabilität. Mit Folien aus Beispiel D können ca. 10 % höhere Windungszahlen erreicht werden, ohne daß die entsprechenden Wickelränder abkippen beziehungsweise. instabil werden (vgl. Tabelle 2). Dies ist ein weiterer Vorteil der erfindungsgemäßen Folien, der sich in einer verbesserten Produktivität der Schichtkondensatorherstellung widerspiegelt.

## Patentansprüche

1. Orientierte ein- oder mehrschichtige Folie aus Polyester mit einer Gesamtdicke von ≤ 4 µm, einem Gesamtgehalt Partikel I und Partikel II von 0,005 bis 5 Gew-%, bezogen auf das Gesamtgewicht der Folie und einer Rauhigkeit auf mindestens einer ihrer Oberflächen von Rₐ < 30 nm und einer Oberflächengasströmungszeit auf mindestens einer Folienoberfläche von t < 2.900 sec dadurch gekennzeichnet, daß zur Verbesserung der Wickelstabilität deren metallisierter Schmalschnitte zu einer Windungszahl von ≥ 8.000 der mittlere Teilchendurchmesser der Partikel I kleiner als 0,5 µm und der mittlere Teilchendurchmesser der Partikel II 3,0 bis 4,0 µm ist.

2. Orientierte Folie nach Anspruch 1, dadurch gekennzeichnet, daß die Folie eine Trübung von ≤ 4,0 % besitzt.

3. Orientierte Folie nach Anspruch 1 oder 2, dadurch gekennzeichnet, daß sie biaxial orientiert ist.

4. Orientierte Folie nach einem der Ansprüche 1 bis 3, dadurch gekennzeichnet, daß sie einschichtig ist.

5. Verwendung einer orientierten Folie nach einem der Ansprüche 1 bis 4 als Kondensatorfolie.

## Claims

1. An oriented monolayer or multilayer polyester film having a total thickness of ≤ 4 *µ*m, a total content of particles I and particles II of from 0.005 to 5% by weight, based on the total weight of the film and a roughness on at least one of its film surfaces of Rₐ < 30 nm and a surface gas flow time on at least one film surface of t < 2900 sec, wherein, in order to improve the winding stability of its metalized narrow sides to a winding number of ≥ 8000, the average particle diameter of the particles I is less than 0.5 *µ*m and the average particle diameter of the particles II is from 3.0 to 4.0 *µ*m.

2. The oriented film as claimed in claim 1, wherein the film has a haze of ≤ 4.0%.

3. The oriented film as claimed in claim 1 or 2, which is biaxially oriented.

4. The oriented film as claimed in one of claims 1 to 3, which is monolayer.

5. The use of an oriented film as claimed in one of claims 1 to 4 as a capacitor film.

## Revendications

1. Pellicule de polyester orientée, mono- ou multicouche, ayant une épaisseur totale de ≤ 4 µm et une teneur totale en particules I et particules II de 0,005 à 5 % en poids, par rapport au poids total de la pellicule, et une rugosité sur au moins une de ses faces de Rₐ < 30 nm, et un temps de flux de gaz superficiel, sur au moins une face de la pellicule, de t < 2 900 s, caractérisée en ce que, pour l'amélioration de la tenue à l'enroulement de ses rubans métallisés jusqu'à un nombre d'enroulements de ≥ 8 000, le diamètre moyen des particules I est inférieur à 0,5 µm et le diamètre moyen des particules II va de 3,0 à 4,0 µm.

2. Pellicule orientée selon la revendication 1, caractérisée en ce que la pellicule a une opacité de ≤ 4,0 %.

3. Pellicule orientée selon la revendication 1 ou 2, caractérisée en ce qu'elle est orientée biaxialement.

4. Pellicule orientée selon l'une des revendications 1 à 3, caractérisée en ce qu'elle est monocouche.

5. Utilisation d'une pellicule orientée selon l'une des revendications 1 à 4, en tant que pellicule de condensateur.
